# EUROPEAN PATENT SPECIFICATION

(11) **EP 3 339 188 B1**
(45) Date of publication and mention of the grant of the patent: **22.04.2020**
(21) Application number: 16206753.2
(22) Date of filing: 23.12.2016
(51) Int. Cl.: B64G 1/10, B64G 1/42, B64G 1/64, B64G 1/66, B64G 1/22

(54) **CUBESAT BUS ARCHITECTURE**
CUBESAT-BUSARCHITEKTUR
ARCHITECTURE DE BUS CUBESAT

(43) Date of publication of application: 27.06.2018
(73) Proprietor: UNIVERSITE DE MONTPELLIER, 34090 Montpellier (FR)
(72) Inventor: FIOL, Thierry, 30870 Clarensac (FR); CLOTILDE, Bernard, 30900 Nîmes (FR); PONSA, Valérie, 30900 Nîmes (FR); DUSSEAU, Laurent, 34980 Saint Gély du Fesc (FR)
(74) Representative: Gevers & Orès

(56) References cited:
- CN-B- 102 975 867
- RU-C1- 2 550 241
- US-A1- 2011 296 675
- US-A1- 2014 263 844
- US-A1- 2015 367 965
- US-A1- 2015 372 374
- US-A1- 2016 288 931

## Description

The present invention concerns an architecture for a bus dedicated to building satellites according to the CubeSat Design Specification.

Started in 1999, the CubeSat Project began as a collaborative effort between Prof. Jordi Puig-Suari at California Polytechnic State University (Cal Poly), San Luis Obispo, and Prof. Bob Twiggs at Stanford University's Space Systems Development Laboratory (SSDL). The purpose of this project is to provide a standard for designing satellites such as nanosatellites and picosatellites, to reduce cost and development time, to increase accessibility to space, and to sustain frequent launches. Presently, the CubeSat Project is an international collaboration of over 100 universities, high schools, and private firms developing picosatellites containing scientific, private, and government payloads. A CubeSat satellite is a 10 cm cube with a mass of up to 1.33 kg. Developers benefit from the sharing of information within the community.

The CubeSat Design Specification Rev. 13 gives external specification for a Cubesat satellite in order to ensure compatibility with a launch vehicle, the Poly-PicoSatellite Orbital Deployer and the launch proceeding, it is silent on the internal architecture of the satellite itself. This internal architecture is the responsibility of the satellite manufacturer.

Documents US 2011/0296675 and US 2014/263844 deal with this technology. US 2011/0296675 describes a structure for rapid assembly of self-contained apparatus such as a spacecraft or satellite. In US 2011/0296675 the apparatus comprises a plurality of vertical and horizontal manifolds and a bottom panel.

The bus of such picosatellite is defined as the common architecture allowing to manufacture different CubeSat satellites. It comprises a hardware mechanical frame used as a structure on which all other parts of the satellite will be fixed. It also comprises an electrical part and electronical components, fixed on the mechanical frame, on which the electrical part and electronical components will be plugged. The bus will be completed with electronical components comprising typically a battery for providing energy, telecommunication modules to communicate with Earth, storage modules to store any collected data. The bus will also be completed with a specific payload, for example a set of specific sensors to collect data, or a specific module for accomplishing the satellite mission. The bus will also receive several satellite faces, typically comprising solar panels to charge the battery and antennas for the telecommunication modules. The bus plus antennas, the satellite faces and the electronic components constitute the complete satellite.

Designing a CubeSat bus architecture is a challenge as the bus needs to fulfil severe constraints. As in any space application, reliability is required, as no human intervention is possible on the satellite once it has been placed in the launch vehicle. The satellite should resist to severe vibrations during the launch.

Thus, the challenge is to design a simple, reliable, cheap and versatile bus that can be used to manufacture as many different satellites as possible.

The present invention has been devised to address one or more of the foregoing concerns.

According to a first aspect of the invention, there is provided a nano-satellite bus, comprising:
- a mono-bloc mechanical frame comprising a plurality of posts and edges forming the sides of the said mechanical frame;
- a back panel for the connection of electronic components;
- at least a connector with spring contacts, said connector being connected to the back panel and fixed to the mono-bloc mechanical frame, said spring contacts being mounted as a through-hole component through one post of the mono-bloc mechanical frame for the connection of satellite faces.

In an embodiment of the invention, the spring contacts are mounted through an aperture machined through a post of the mono-bloc mechanical frame.

In an embodiment of the invention, the mono-bloc mechanical frame is made in a metal.

Advantageously, a mechanical frame machined within a mono-bloc mechanical frame made in a metal avoids any assembly of several parts, and prevents any possible disassembly during the life of the satellite.

Advantageously, a mechanical frame constituted by a mono-bloc made in a metal avoids the use of welding joints.

Advantageously, a mechanical frame constituted by a mono-bloc metallic structure prevents deformations and/or the appearance of structural weaknesses.

In an embodiment of the invention, the metal is an aluminium alloy such as 7075, 6061, 5005 and 5052 aluminum.

Advantageously, a mono-bloc mechanical frame made in a metal, and in particular, comprising a 7075, 6061, 5005 and/or 5052 aluminum alloy has a light weight and a large resistance.

In an embodiment of the invention, the nano-satellite bus comprises one connector with spring contacts for the connection of each face of the nano-satellite.

In an embodiment of the invention, the nano-satellite bus further comprises:
- at least a deployment switch operated by a sliding rod cooperating with a spring mounted within a post of the mechanical frame and acting as a push button.

In an embodiment of the invention, a stroke of the sliding rod is longer than 2 millimeters.

In an embodiment of the invention, the nano-satellite bus further comprises:
- at least a second redundant deployment switch with the same function.

In an embodiment of the invention, the nano-satellite bus further comprises:
- faces mounted to the mono-bloc structure comprising current sources connected to the back-panel through said connectors.

In an embodiment of the invention, the nano-satellite bus further comprises:
- at least an antenna connected to said mechanical frame;
said antenna comprising a warming device to cut a nylon wire to free the antenna; said antenna high frequency circuit being connected to the back panel through a connector; said warming device being connected to the back panel through the antenna fixing screws.

In an embodiment of the invention, the nano-satellite bus further comprises:
- a central plate fixed to lateral posts of the mechanical frame and to the back panel.

In an embodiment of the invention, the nano-satellite bus further comprises:
- lugs for receiving spacers through a rod for the fixation of the top of daughter boards.

In an embodiment of the invention, the central plate further comprises:
- a place to receive a battery for the alimentation of the nano-satellite.

In an embodiment of the invention, the central plate further comprises:
- a shield to protect the battery.

In an embodiment of the invention, the battery comprises a flange ensuring a contact between a sensor and the said battery.

In an embodiment of the invention, the nano-satellite bus is compatible with the specifications of the Cubesat Design Specification Rev. 13.

According to a second aspect of the invention, there is provided a nano-satellite comprising a nano-satellite bus comprising any of the preceding features.

Embodiments of the invention will now be described, by way of example only, and with reference to the following drawings in which:
**Figure 1** illustrates a mechanical frame for a nano-satellite bus in an embodiment of the invention;
**Figure 2** illustrates a back panel for a nano-satellite bus in an embodiment of the invention;
**Figure 3** illustrates a back panel with connectors and electrical connections for a nano-satellite bus in an embodiment of the invention;
**Figure 4** illustrates an assembly of spring contacts on the mechanical frame for a nano-satellite bus in an embodiment of the invention;
**Figure 5** illustrates a connection of spring contacts for a nano-satellite bus in an embodiment of the invention;
**Figure 6** illustrates a detail of the bus featuring a deployment switch for a nano-satellite bus in an embodiment of the invention;
**Figure 7** illustrates an internal structure of a deployment switch for a nano-satellite bus in an embodiment of the invention;
**Figure 8** illustrates a central plate for a nano-satellite bus in an embodiment of the invention;
**Figure 9** illustrates a central plate fixed on a back panel for a nano-satellite bus in an embodiment of the invention;
**Figure 10** illustrates a central plate with daughter boards for a nano-satellite bus in an embodiment of the invention;
**Figure 11** illustrates a cross section of a central plate with daughter boards for a nano-satellite bus in an embodiment of the invention;
**Figure 12** illustrates a central plate along with a battery for a nano-satellite bus in an embodiment of the invention;
**Figure 13** illustrates a battery with a control board for a nano-satellite bus in an embodiment of the invention;
**Figure 14** illustrates an access port mounted on a central plate for a nano-satellite bus in an embodiment of the invention;
**Figure 15** illustrates a stop-off switch for a nano-satellite bus in an embodiment of the invention;
**Figure 16** illustrates a bundle of connectors connecting an access port for a nano-satellite bus in an embodiment of the invention;
**Figure 17** illustrates bounding pads of a bundle of connectors for a nano-satellite bus in an embodiment of the invention;
**Figure 18** illustrates a temperature sensor of a battery for a nano-satellite bus in an embodiment of the invention;
**Figure 19** illustrates a temperature sensor of a battery with a flange for a nano-satellite bus in an embodiment of the invention;
**Figure 20** illustrates a complete bus with a mounted battery for a nano-satellite bus in an embodiment of the invention;
**Figure 21** illustrates an antenna and a connection for a nano-satellite bus in an embodiment of the invention.

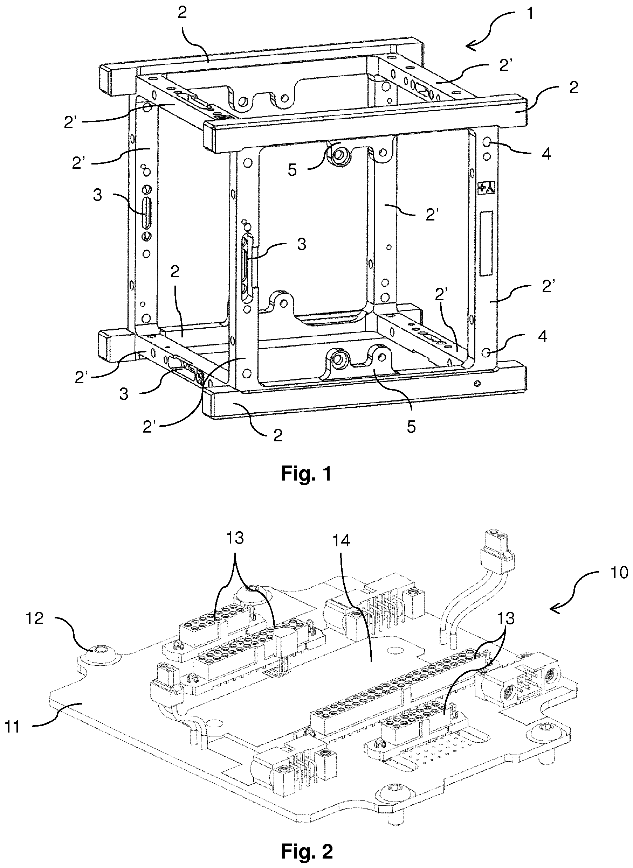

**Figure 1** illustrates a mechanical frame **1** in an embodiment of the invention. The mechanical frame **1** comprises a set of posts **2** forming, in the example a cube, the posts being located on the sides of the cube. At least some of the posts **2** and of the edges 2' are provided with an aperture **3** intended for receiving connectors with spring contacts. The posts **2** and the edges **2'** can also be provided with holes **4** containing one or several pitch forming nuts for the fixation of some faces to the mechanical frame. Advantageously, the frame is provided with mounting lugs **5** for the fixation of lateral posts. The mechanical frame **1** further comprises a set of edges **2'** connecting the posts **2.** In an embodiment of the invention, the mechanical frame **1** comprises four posts **2** and eight edges **2'.**

**Figure 2** illustrates a back panel **10** in an embodiment of the invention. The back panel **10** comprises a printed circuit board (PCB) **11** intended to be fixed to the mechanical frame **1** as an internal face of the cube with screws **12.** The screws **12** correspond to associated nuts machined in the posts **2** and the edges **2'** of the mechanical frame **1.** The printed circuit board **11** is provided with connectors **13** to connect different electronic components typically formed by electronic daughter boards. A place **14** is provided for the fixation of a central plate which will be described in more details below.

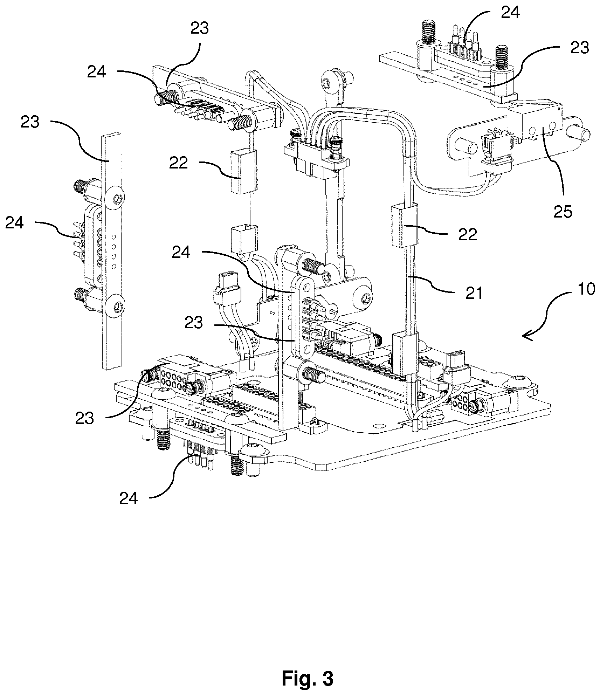

**Figure 3** illustrates a back panel **10** with connectors and electrical connections in an embodiment of the invention. The back panel **10** is provided with a bundle of connectors **21** connecting a battery and feeding the different electronic components of a satellite. This bundle of connectors **21** has bounding pads for fixation **22** of the bundle to the central plate (not represented). The back panel is also provided with connectors **23** for the connection to faces of a satellite. These faces typically comprise solar panels adapted to charge the battery. They are connected to the back panel **10** using connectors which are not represented on **figure 3****.** The connectors **23** are provided with a set **24** of spring contacts, such as a compressible elastomer, or a compressible composite material, for the connection with the faces. The connectors **23** are screwed to the posts in order to allow the spring contacts to fit into through-holes provided within the posts. Screwing the faces to the posts will bring the spring contacts in contact with corresponding contacts provided in the faces to the posts **2** and the edges **2'.** By doing so, a good connection is provided between the back panel **10** and the faces of the satellite by simply screwing the faces on the posts of the mechanical frame. There is no need to connect dedicated connectors when fixing the faces. At least a deployment switch **25** is connected to the bundle of connectors **21.** This deployment switch, which will described in more details below, aims at cutting a power circuit during a launch of the satellite and can be automatically switched on after launch to allow operating the satellite. It is fixed to a post of the mechanical frame and cooperates with a sliding rod and a spring to allow the automatic switch on of the satellite at liberation.

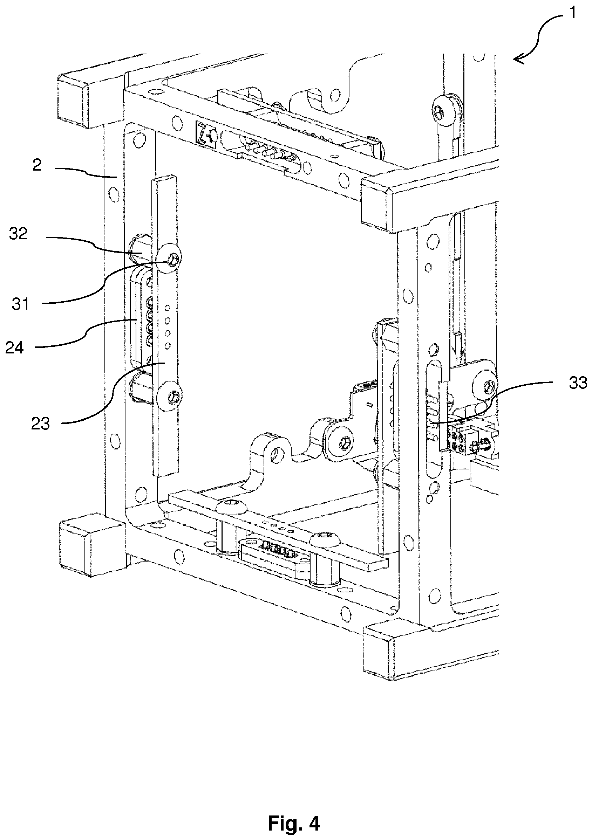

**Figure 4** illustrates the assembly of spring contacts on the mechanical frame **1** in an embodiment of the invention. The connector **23** is fixed to the post **2** with screws **31** and a spacer **32** in order to have the spring contacts **24** to fit the hole in the post **2** and to go through the post **2** and the extremity **33** of the spring contacts. Advantageously, each face of the cube comprises one connector **23.**

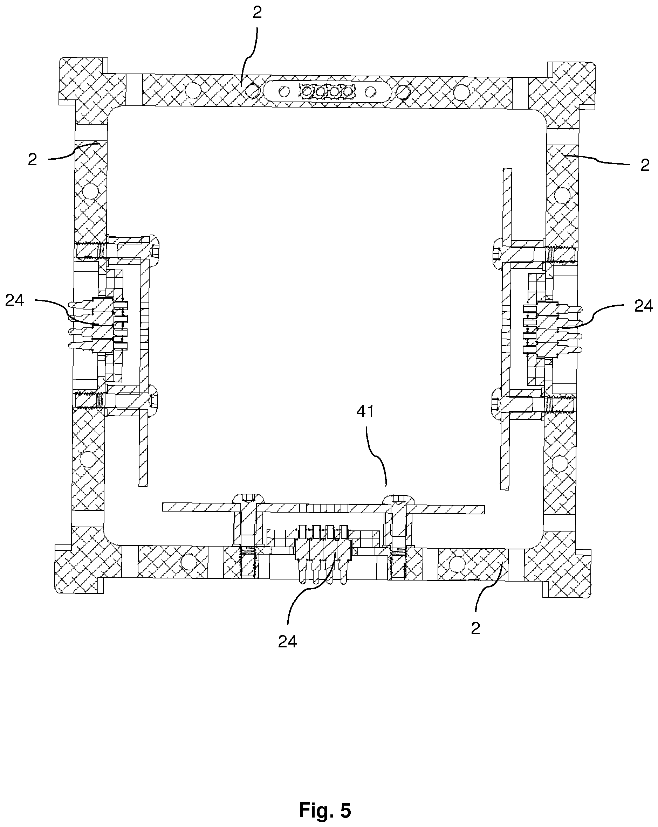

**Figure 5** illustrates a connection of spring contacts in an embodiment of the invention. **Figure 5** is a cross-section of four posts **2** at the level of the spring contacts **24** showing the spring contacts **24** and the connector **41** connecting the spring contacts **24** together.

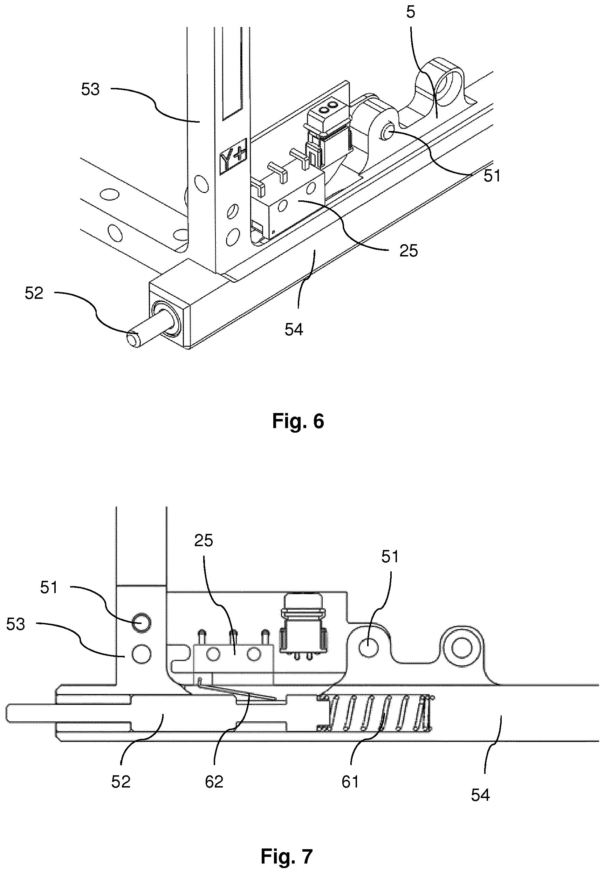

**Figure 6** and **Figure 7** illustrate a deployment switch in an embodiment of the invention. The deployment switch **25** is fixed on a plate that is screwed using screws **51** on a post **53** of the mechanical frame on a first side and on the mounting lug **5** on the other side. The deployment switch cooperates with the sliding rod **52** which is mounted within the post **54.** An extremity of the sliding rod **52** projects outside the post **54.** A spring **61,** such as a compressible elastomer or a compressible composite material, pushes the sliding rod **52** in the direction of the outside of the post **54.** Alternatively, the spring **61** can be an electromagnet or a gas piston. The stroke of the sliding rod is limited in a way to allow the sliding rod **52** to act as a push button. When the sliding rod **52** is pushed within the post **54,** a stopper within the sliding rod **52** pushes an actuator **62** of the deployment switch in order to cut the power of the entire electronic system of the satellite. When the satellite is placed in a launch vehicle, the sliding rod **52** is maintained in the pushed position. At the liberation of the satellite, the sliding rod **52** is released and the power is switched on. It is important to avoid unwanted switch on of the power accidentally during the flight of the launch vehicle due to vibrations. Advantageously, the stroke of the sliding rod **52** is at least two millimeters to avoid accidental switch on. In the described example, the stroke is 10 millimeters.

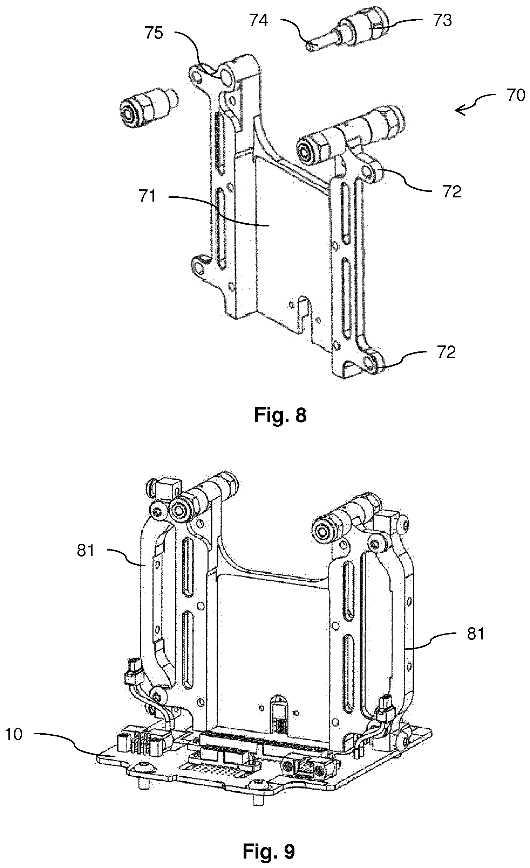

**Figure 8** illustrates a central plate **70** in an embodiment of the invention. The central plate **70** is provided with mounting lugs **72** for the fixation of the central plate **70** to laterals posts. The lateral posts are fixed to mounting lugs **5** of the mechanical frame. The central plate **70** comprises a placement **71** for the battery of the satellite. It also provides lugs **75** for receiving spacers **73** through a rod **74** for the fixation of the top of daughter boards **91.** The central plate **70** is intended for rigidifying the whole structure while providing a central location for the battery which is an heavy part of the satellite that is advantageously located near the centre of gravity of the satellite.

**Figure 9** illustrates a central plate **70** fixed on the back panel **10** in an embodiment of the invention. On this figure the fixation of the central plate on the lateral posts **81** is illustrated. The central plate is screwed on the back panel **10** and to lateral posts **81.**

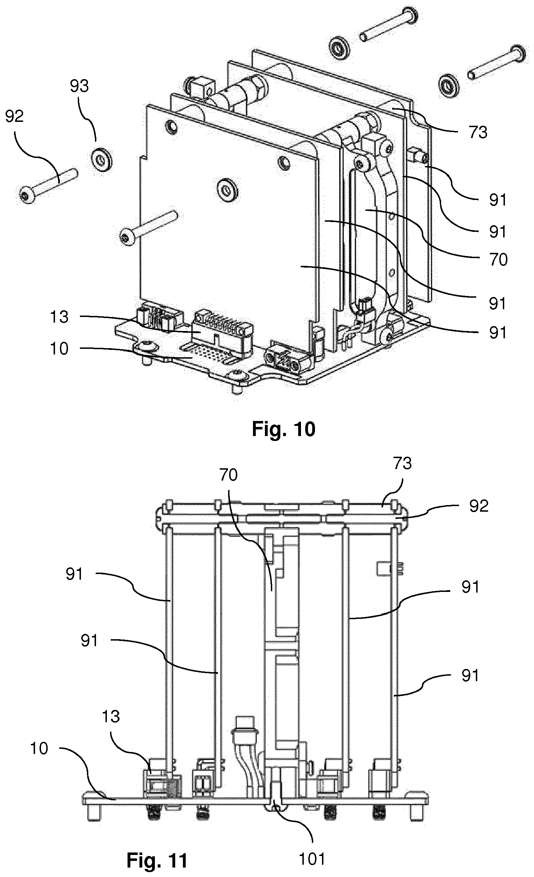

**Figure 10** illustrates a central plate **70** with daughter boards **91** in an embodiment of the invention. The bottom of the daughter boards **91** is fixed to connectors **13** of the back panel **10.** The top of the daughter boards **91** is fixed to the central plate through spacers **73** secured with screws **92.** Advantageously, a washer 93 is used between the screw **92** and the daughter board **91.**

**Figure 11** illustrates a cross section of the central plate **70** with daughter boards **91** in an embodiment of the invention. This figure shows more clearly the fixation of the top of daughter boards **91** to the central plate **70** using spacers **73** and the screws **92.** This figure also shows the screw **101** fixing the central plate to the back panel **10.**

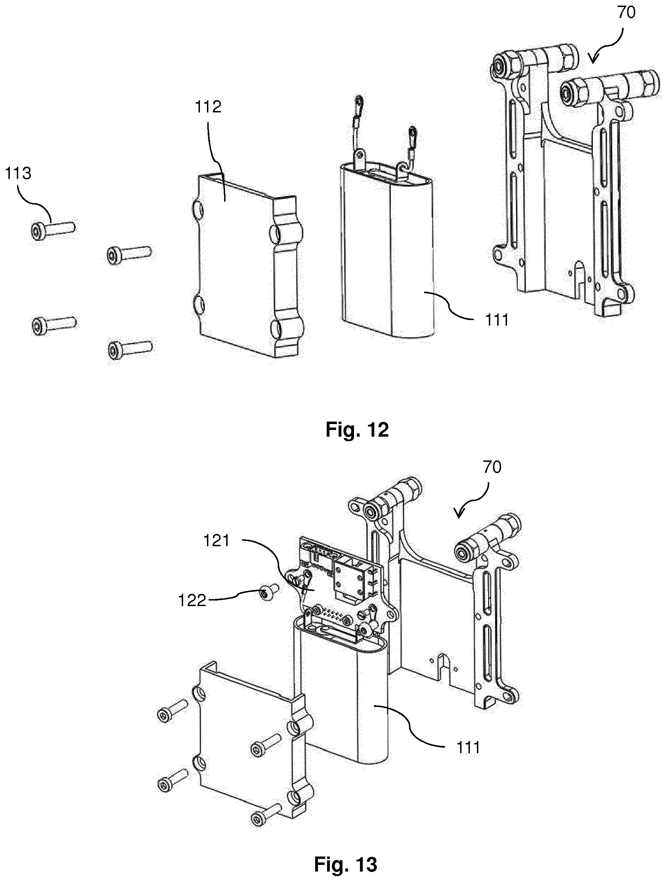

**Figure 12** illustrates a central plate **70** along with a battery **111** in an embodiment of the invention. The battery **111** is fixed to the central plate **70** with a shield **112** fixed to the central plate **70** with screws **113.** Advantageously, the battery is surrounded by a lining that favours thermic exchanges with the whole structure. This lining may be made of CHO-THERM (registered trademark). This lining may comprise a thermal paste, or a braze of a conductive drain on the battery **111.**

**Figure 13** illustrates a battery **111** with a control board **121** in an embodiment of the invention. The control board is fixed to the central plate **70** with screws **122** and connected to the battery **111.**

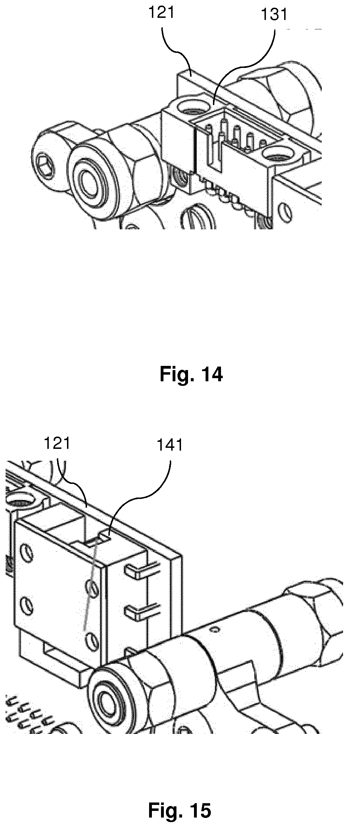

**Figure 14** illustrates an access port **131** mounted on a control board **121** in an embodiment of the invention. The aim of the access port **131** is to allow the connection to the system for testing, setting parameters, monitoring, providing external energy and charging the battery **111** once the satellite is mounted.

**Figure 15** illustrates a stop-off switch **141** mounted on a control board **121** in an embodiment of the invention. The aim of the stop-off switch **141** is to switch off the system before the flight. The stop-off switch is operated with a "Remove Before Flight" pin that is inserted into the stop-off switch to guarantee that the system is switched off while the pin is inserted. Before the launch, the pin should be removed to allow the switch-on of the system by the deployment switch **25.**

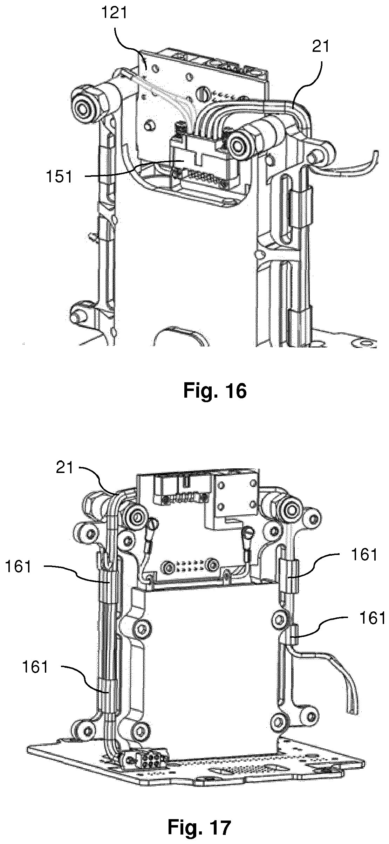

**Figure 16** illustrates a bundle of connectors **21** connecting an access port signal to the different electronic components in the system, in an embodiment of the invention. The bundle of connectors **21** is connected to a connector **151** placed on the back of the control board **121.**

**Figure 17** illustrates the bounding pads **161** of the bundle of connectors **21** in an embodiment of the invention. The bounding pads **161** are used to secure the bundle of connectors to the central plate.

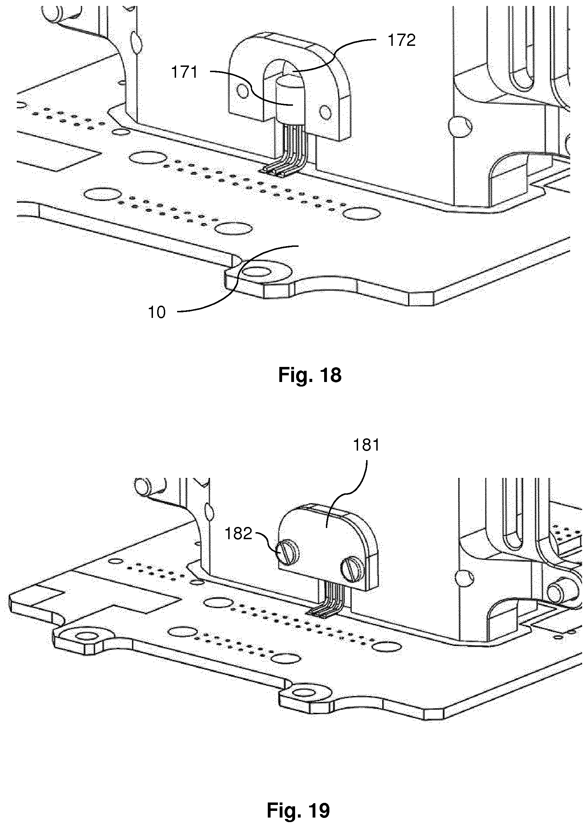

**Figure 18** illustrates the temperature sensor **171** of the battery **111** in an embodiment of the invention. The temperature sensor **171** is placed in contact with the battery through a cavity **172** and connected to the back panel **10.**

**Figure 19** illustrates the temperature sensor **171** of the battery **111** comprising a flange **181** in an embodiment of the invention. The aim of the flange **181** is that the sensor **171** is in contact with the battery 111 to ensure the thermal connection. The flange **181** is fixed with screws **182.** A thermal pase, or CHO-THERM, can also be used to ensure the thermal connection.

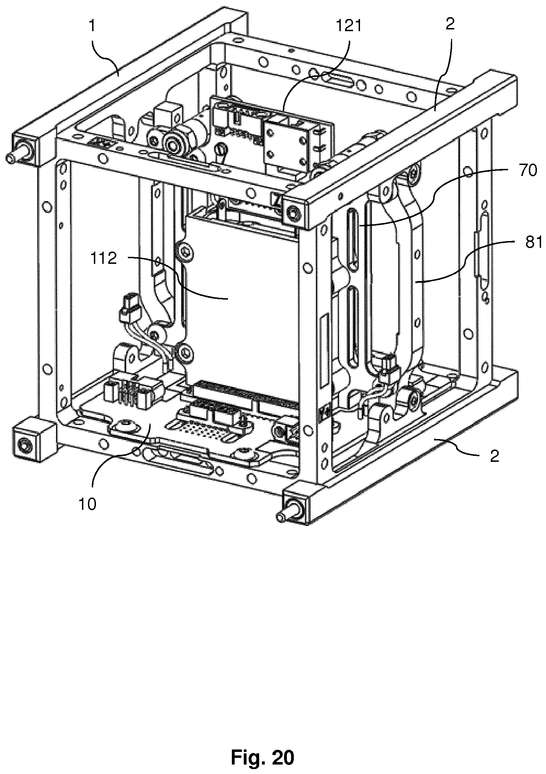

**Figure 20** illustrates a complete nano-satellite bus equipped with a battery and a mounted central plate **70** in an embodiment of the invention. The lateral posts **81** are fixed to the posts **2** of the mechanical frame **1.** The back panel **10** is fixed on the bottom posts of the mechanical frame **1.** The central plate **70** is mounted on the back panel **10** and fixed to the lateral posts **81.** The battery is installed in the central plate **70** and provided with a control board **121** and a shield **112.**

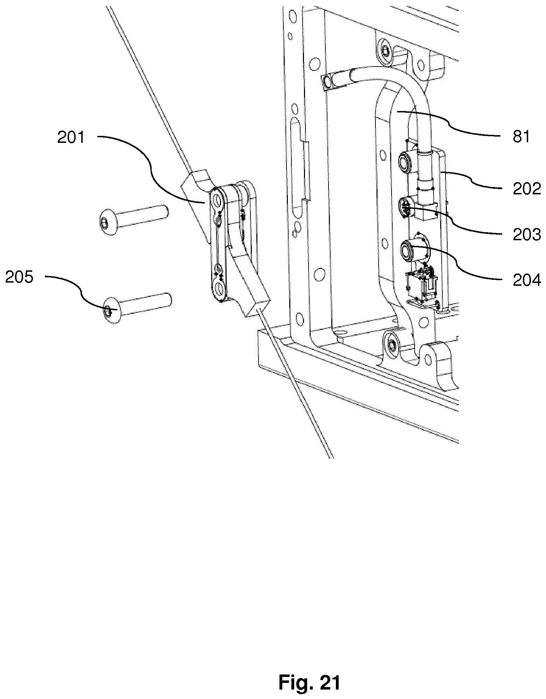

**Figure 21** illustrates an antenna **201** and its connection in an embodiment of the invention. The antenna **201** is screwed with screws **205** to a support plate **202.** The support plate **202** is fixed to a lateral post **81.** The support plate **202** is provided with nuts **204.** A signal is provided through the connector **203** connected to the antenna **201.** Advantageously, the antenna is provided with a self-deployment capacity. This self-deployment capacity consists in a warming device adapted to cut a nylon wire to free the antenna **201.** When the antenna **201,** which is first wrapped and maintained by the nylon wire, is freed, the antenna automatically unwraps. Advantageously, the warming device is supplied through the fixation screws **205.** The high frequency circuit of the antenna is connected to a dedicated connector **203.** Alternatively, the antenna is mounted on a face of the satellite, and both the alimentation of the warming device and the high frequency signal are transmitted via the spring contacts **24** connecting the face to the back panel.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality.

## Claims

1. A nano-satellite bus, comprising:
- a mono-bloc mechanical frame (1) comprising a plurality of posts and edges (2, 2') forming the sides of the said mechanical frame;
- a back panel (10) for the connection of electronic components;
- at least a connector (23) **characterized in that** said connector (23) comprises spring contacts (24), said connector (23) being connected to the back panel (10) and fixed to the mono-bloc mechanical frame (1), said spring contacts (24) being mounted as a through-hole component through one post (2) of the mono-bloc mechanical frame (1) for the connection of satellite faces.

2. The nano-satellite bus according to claim 1, **characterized in that** said spring contacts (24) are mounted through an aperture (3) machined through a post (2) of the mono-bloc mechanical frame (1).

3. The nano-satellite bus according to anyone of claims 1 to 2, **characterized in that** said mono-bloc mechanical frame (1) is made in a metal.

4. The nano-satellite bus according to claim 3, **characterized in that** said metal is an aluminium alloy such as 7075, 6061, 5005 and 5052 aluminum.

5. The nano-satellite bus according to anyone of claims 1 to 4, **characterized in that** it comprises one connector (23) with spring contacts (24) for the connection of each face of the nano-satellite.

6. The nano-satellite bus according to anyone of claims 1 to 5, **characterized in that** it further comprises:
- at least a deployment switch (25) operated by a sliding rod (52) cooperating with a spring (61) mounted within a post (2) of the mechanical frame (1) and acting as a push button.

7. The nano-satellite bus according to claim 5, **characterized in that** a stroke of the sliding rod (52) is longer than 2 millimeters.

8. The nano-satellite bus according to anyone of claims 6 to 7, **characterized in that** it further comprises:
- at least a second redundant deployment switch (25) with the same function.

9. The nano-satellite bus according to anyone of claims 6 to 8, **characterized in that** it further comprises:
- faces mounted to the mono-bloc structure comprising current sources connected to the back-panel through said connectors (23).

10. The nano-satellite bus according to anyone claim 6 to 9, **characterized in that** it further comprises:
- at least an antenna (201) connected to said mechanical frame (1);
- said antenna (201) comprising a warming device to cut a nylon wire to free the antenna;
- said antenna high frequency circuit being connected to the back panel (10) through a connector (203);
- said warming device being connected to the back panel (10) through the antenna fixing screws (205).

11. The nano-satellite bus according to anyone claim 6 to 9, **characterized in that** it further comprises:
- at least an antenna (201) connected a face of the satellite;
- said antenna (201) comprising a warming device to cut a nylon wire to free the antenna;
- said antenna high frequency circuit and said warming device being connected to the back panel (10) through the connector (24) connecting the face.

12. The nano-satellite bus according to any of the preceding claims, **characterized in that** it further comprises:
- a central plate (70) fixed to lateral posts (81) of the mechanical frame (1) and to the back panel (10).

13. The nano-satellite bus according to claim 12, **characterized in that** the central plate (40) further comprises:
- lugs (75) for receiving spacers (73) through a rod (74) for the fixation of the top of daughter boards (91).

14. The nano-satellite bus according to anyone of claims 12 to 13, **characterized in that** the central plate (40) further comprises:
- a place to receive a battery (111) for the alimentation of the nano-satellite.

15. The nano-satellite bus according to claim 14, **characterized in that** the central plate (40) further comprises:
- a shield (112) to protect the battery (111).

16. The nano-satellite bus according to claim 15, **characterized in that** the battery (111) comprises a flange (181) ensuring a contact between a sensor (171) and the said battery (111).

17. A nano-satellite comprising a nano-satellite bus according to any of the preceding claims.

## Patentansprüche

1. Nano-Satellitenbus, umfassend:
- einen mechanischen Monoblock-Rahmen (1), umfassend eine Vielzahl von Pfosten und Kanten (2, 2'), die die Seiten des genannten mechanischen Rahmens bilden;
- eine Rückplatte (10) für die Verbindung von elektronischen Komponenten;
- mindestens einen Steckverbinder (23), **dadurch gekennzeichnet, dass** der Steckverbinder (23) Federkontakte (24) umfasst, wobei der Steckverbinder (23) mit der Rückplatte (10) verbunden und an dem mechanischen Monoblock-Rahmen (1) befestigt ist, wobei die Federkontakte (24) als eine Durchgangsloch-Komponente durch einen Pfosten (2) des mechanischen Monoblock-Rahmens (1) für die Verbindung von Satellitenflächen montiert sind.

2. Nano-Satelliten-Bus nach Anspruch 1, **dadurch gekennzeichnet, dass** die Federkontakte (24) durch eine Öffnung (3) montiert sind, die durch einen Pfosten (2) des mechanischen Monoblock-Rahmens (1) gefräst ist.

3. Nano-Satellitenbus nach einem der Ansprüche 1 bis 2, **dadurch gekennzeichnet, dass** der mechanische Monoblock-Rahmen (1) aus einem Metall besteht.

4. Nano-Satellitenbus nach Anspruch 3, **dadurch gekennzeichnet, dass** das Metall eine Aluminiumlegierung wie Aluminium 7075, 6061, 5005 und 5052 ist.

5. Nano-Satellitenbus nach einem der Ansprüche 1 bis 4, **dadurch gekennzeichnet, dass** er einen Steckverbinder (23) mit Federkontakten (24) für die Verbindung jeder Fläche des Nano-Satelliten umfasst.

6. Nano-Satellitenbus nach einem der Ansprüche 1 bis 5, **dadurch gekennzeichnet, dass** er weiter umfasst:
- mindestens einen Auslöseschalter (25), der durch eine Schubstange (52) betätigt wird, die mit einer Feder (61) zusammenwirkt, die in einem Pfosten (2) des mechanischen Rahmens (1) montiert ist und als Drucktaster wirkt.

7. Nano-Satellitenbus nach Anspruch 5, **dadurch gekennzeichnet, dass** ein Hub der Schubstange (52) länger als 2 Millimeter ist.

8. Nano-Satellitenbus nach einem der Ansprüche 6 bis 7, **dadurch gekennzeichnet, dass** er weiter umfasst:
- mindestens einen zweiten redundanten Auslöseschalter (25) mit der gleichen Funktion.

9. Nano-Satellitenbus nach einem der Ansprüche 6 bis 8, **dadurch gekennzeichnet, dass** er weiter umfasst:
- Flächen, die an der Monoblockstruktur montiert sind, umfassend Stromquellen, die über die genannten Steckverbinder (23) mit der Rückplatte verbunden sind.

10. Nano-Satellitenbus nach einem der Ansprüche 6 bis 9, **dadurch gekennzeichnet, dass** er weiter umfasst:
- mindestens eine Antenne (201), die mit dem mechanischen Rahmen (1) verbunden ist;
- wobei die Antenne (201) eine Erwärmungsvorrichtung zum Durchschneiden eines Nylondrahtes umfasst, um die Antenne zu befreien;
- wobei die Hochfrequenzschaltung der Antenne über einen Steckverbinder (203) mit der Rückplatte (10) verbunden ist;
- wobei die Wärmevorrichtung über die Antennenbefestigungsschrauben (205) mit der Rückplatte (10) verbunden ist.

11. Nano-Satellitenbus nach einem der Ansprüche 6 bis 9, **dadurch gekennzeichnet, dass** er weiter umfasst:
- mindestens eine Antenne (201), die mit einer Fläche des Satelliten verbunden ist;
- wobei die Antenne (201) eine Erwärmungsvorrichtung zum Durchschneiden eines Nylondrahtes umfasst, um die Antenne zu befreien;
- wobei die Hochfrequenzschaltung der Antenne und die Erwärmungsvorrichtung mit der Rückplatte (10) über den Steckverbinder (24), der die Fläche verbindet, verbunden sind.

12. Nano-Satellitenbus nach einem der vorstehenden Ansprüche, **dadurch gekennzeichnet, dass** er weiter umfasst:
- eine mittige Platte (70), die an seitlichen Pfosten (81) des mechanischen Rahmens (1) und an der Rückplatte (10) befestigt ist.

13. Nano-Satelliten-Bus nach Anspruch 12, **dadurch gekennzeichnet, dass** die mittige Platte (40) weiter umfasst:
- Ösen (75) zur Aufnahme von Abstandshaltern (73) durch eine Stange (74) zur Befestigung der Oberseite von Tochterplatinen (91).

14. Nano-Satellitenbus nach einem der Ansprüche 12 bis 13, **dadurch gekennzeichnet, dass** die mittige Platte (40) weiter umfasst:
- eine Stelle zur Aufnahme einer Batterie (111) für die Versorgung des Nanosatelliten.

15. Nano-Satelliten-Bus nach Anspruch 14, **dadurch gekennzeichnet, dass** die mittige Platte (40) weiter umfasst:
- eine Abschirmung (112) zum Schutz der Batterie (111).

16. Nanosatellitenbus nach Anspruch 15, **dadurch gekennzeichnet, dass** die Batterie (111) einen Flansch (181) umfasst, der einen Kontakt zwischen einem Sensor (171) und der genannten Batterie (111) gewährleistet.

17. Nanosatellit, umfassend einen Nanosatellitenbus nach einem der vorstehenden Ansprüche.

## Revendications

1. Bus nano-satellitaire comprenant :
- un châssis mécanique monobloc (1) comprenant une pluralité de montants et de bords (2, 2') formant les côtés dudit châssis mécanique ;
- un panneau arrière (10) pour la connexion de composants électroniques ;
- au moins un connecteur (23) **caractérisé en ce que** ledit connecteur (23) comprend des contacts à ressort (24), ledit connecteur (23) étant connecté au panneau arrière (10) et fixé au châssis mécanique monobloc (1), lesdits contacts à ressort (24) étant montés sous la forme d'un composant traversant à travers un montant (2) du châssis mécanique monobloc (1) pour la connexion de faces du satellite.

2. Bus nano-satellitaire selon la revendication 1, **caractérisé en ce que** lesdits contacts à ressort (24) sont montés à travers une ouverture (3) usinée à travers un montant (2) du châssis mécanique monobloc (1).

3. Bus nano-satellitaire selon l'une quelconque des revendications 1 à 2, **caractérisé en ce que** ledit châssis mécanique monobloc (1) est constitué d'un métal.

4. Bus nano-satellitaire selon la revendication 3, **caractérisé en ce que** ledit métal est un alliage d'aluminium tel que de l'aluminium 7075, 6061, 5005 et 5052.

5. Bus nano-satellitaire selon l'une quelconque des revendications 1 à 4, **caractérisé en ce qu'**il comprend un connecteur (23) avec des contacts à ressort (24) pour la connexion de chaque face du nano-satellite.

6. Bus nano-satellitaire selon l'une quelconque des revendications 1 à 5, **caractérisé en ce qu'**il comprend en outre :
- au moins un commutateur de déploiement (25) actionné par une tige coulissante (52) coopérant avec un ressort (61) monté au sein d'un montant (2) du châssis mécanique (1) et agissant comme bouton-poussoir.

7. Bus nano-satellitaire selon la revendication 5, **caractérisé en ce qu'**une course de la tige coulissante (52) est plus longue que 2 millimètres.

8. Bus nano-satellitaire selon l'une quelconque des revendications 6 à 7, **caractérisé en ce qu'**il comprend en outre :
- au moins un second commutateur de déploiement redondant (25) avec la même fonction.

9. Bus nano-satellitaire selon l'une quelconque des revendications 6 à 8, **caractérisé en ce qu'**il comprend en outre :
- des faces montées sur la structure monobloc comprenant des sources de courant connectées au panneau arrière à travers lesdits connecteurs (23).

10. Bus nano-satellitaire selon l'une quelconque des revendications 6 à 9, **caractérisé en ce qu'**il comprend en outre :
- au moins une antenne (201) connectée audit châssis mécanique (1) ;
- ladite antenne (201) comprenant un dispositif de chauffage pour couper un fil de nylon afin de libérer l'antenne ;
- le circuit de haute fréquence de ladite antenne étant connecté au panneau arrière (10) à travers un connecteur (203) ;
- ledit dispositif de chauffage étant connecté au panneau arrière (10) au moyen des vis de fixation d'antenne (205).

11. Bus nano-satellitaire selon l'une quelconque des revendications 6 à 9, **caractérisé en ce qu'**il comprend en outre :
- au moins une antenne (201) connectée à une face du satellite ;
- ladite antenne (201) comprenant un dispositif de chauffage pour couper un fil de nylon afin de libérer l'antenne ;
- le circuit de haute fréquence de ladite antenne et ledit dispositif de chauffage étant connectés au panneau arrière (10) à travers le connecteur (24) connectant la face.

12. Bus nano-satellitaire selon l'une quelconque des revendications précédentes, **caractérisé en ce qu'**il comprend en outre :
- une plaque centrale (70) fixée aux montants latéraux (81) du châssis mécanique (1) et au panneau arrière (10).

13. Bus nano-satellitaire selon la revendication 12, **caractérisé en ce que** la plaque centrale (40) comprend en outre :
- des ressauts (75) pour recevoir des espaceurs (73) à travers une tige (74) pour la fixation du sommet de plaques filles (91).

14. Bus nano-satellitaire selon l'une quelconque des revendications 12 à 13, **caractérisé en ce que** la plaque centrale (40) comprend en outre :
- une place pour recevoir une batterie (111) pour l'alimentation du nano-satellite.

15. Bus nano-satellitaire selon la revendication 14, **caractérisé en ce que** la plaque centrale (40) comprend en outre :
- un blindage (112) pour protéger la batterie (111).

16. Bus nano-satellitaire selon la revendication 15, **caractérisé en ce que** la batterie (111) comprend une bride (181) assurant un contact entre un capteur (171) et ladite batterie (111).

17. Nano-satellite comprenant un bus nano-satellitaire selon l'une quelconque des revendications précédentes.
